# EUROPÄISCHE PATENTSCHRIFT

(11) **EP 0 573 803 B1**
(45) Veröffentlichungstag und Bekanntmachung des Hinweises auf die Patenterteilung: **14.10.1998**
(21) Anmeldenummer: 93107776.2
(22) Anmeldetag: 13.05.1993
(51) Int. Cl.: G01F 1/06, G01F 1/08

(54) **Flüssigkeitszähler**
Fluid meter
Compteur de fluide

(30) Priorität: 06.06.1992 DE 4218814
(43) Veröffentlichungstag der Anmeldung: 15.12.1993
(73) Patentinhaber: SPANNER-POLLUX GmbH, D-67063 Ludwigshafen (DE)
(72) Erfinder: Lang, Gerhard, W-6701 Birkenheide (DE)
(74) Vertreter: Patentanwälte Möll und Bitterich

(56) Entgegenhaltungen:
- EP-A- 0 100 393
- EP-A- 0 154 657
- DE-A- 3 104 134

## Beschreibung

Die Erfindung betrifft Flüssigkeitszähler, umfassend ein Flügelrad, eine Meßkammer und eine Zählwerkskammer gemäß dem Oberbegriff des Anspruchs 1.

Flüssigkeitszähler, insbesondere Wasserzähler, nach dem Einstrahl- oder Mehrstrahlprinzip, bei denen ein Flügelrad in einer etwa zylindrischen Meßkammer rotiert, sind in Millionen Stückzahlen weltweit im Einsatz. Sie sind geeicht bzw. beglaubigt. Die Eichung bzw. Beglaubigung gilt jeweils für eine bestimmte Zeitdauer, bei Wasserzählern beispielsweise in Deutschland 8 Jahre. Während der Eichdauer muß der Flüssigkeitszähler den tatsächlichen Verbrauch innerhalb bestimmter Fehlergrenzen anzeigen.

Werden die nach Ablauf der Eichdauer ausgebauten Flüssigkeitszähler stichprobenartig auf Verschleiß usw. überprüft, stellt man immer fest, daß jeweils eines der beiden das Flügelrad führenden Lager stark, das andere dagegen überraschenderweise wenig abgenutzt ist. Es versteht sich, daß ein stark abgenutztes Lager den Lauf des Flügelrades erheblich bremst, so daß ein solcher Flüssigkeitszähler mit zunehmendem Alter immer geringere Verbrauchswerte anzeigt. Diese ungleiche Abnützung tritt bei manchen Zählern am oberen Lager, bei anderen Zählern am unteren Lager auf. Sie tritt sogar bei Zählern mit vertikalem Einbau auf, bei denen die Flügelradwelle waagerecht liegt.

In der EP 0 170 564 ist ein Flüssigkeitszähler beschrieben, dessen Flügelrad mit einer Einrichtung ausgerüstet ist, die dafür sorgt, daß ein belastetes Lager mit zunehmendem Durchfluß mehr und mehr entlastet wird. Zu diesem Zweck ist an dem dem belasteten Lager zugewandten Ende der Flügelradwelle eine Art Glocke vorgesehen, die in einen entsprechenden Ringspalt in Boden oder Decke des Meßraums eintaucht. Mit zunehmendem Durchfluß an Meßflüssigkeit entstehen hydraulische Kräfte, die das Flügelrad solange von dem belasteten Lager abheben, bis der Rand der Glocke aus dem Ringspalt austaucht. In dieser Position rotiert dann das Flügelrad solange, bis der Durchsatz an Meßflüssigkeit zurückgeht, die Glocke wieder in ihren Ringspalt eintaucht und das Lager wieder belastet wird.

Während die Idee, das stärker belastete Flügelradlager mit Hilfe der hydrodynamischen Kräfte zu entlasten, prinzipiell zu begrüßen ist, gilt dies für die offenbarte technische Lösung jedoch weniger. Zunächst setzt sie eine erhebliche Genauigkeit bei der Fertigung, Positionierung und Justierung der Flügelradlager voraus, da andernfalls entweder das belastete Lager nicht genug entlastet oder das andere Lager überlastet wird.

Des weiteren muß bei neuen Flüssigkeitszählern durch Versuche bestimmt werden, welches Lager das stärker belastete ist. Dabei genügt es nicht, nur die spezifischen Gewichte von Flügelrad und Meßflüssigkeit zu vergleichen; vielmehr müssen die bei den großen Durchflüssen entstehenden erheblichen hydrodynamischen Kräfte berücksichtigt werden, die in der Meßkammer und den dort üblicherweise vorhandenen hydraulischen Einbauten sowie an den Flügelpaletten selbst entstehen und die nicht zuletzt auch durch Anzahl, Position und Richtung der Einström- und Ausströmöffnungen bewirkt werden. Erst wenn diese Untersuchungen abgeschlossen sind, kann entschieden werden, ob Glocke und Ringspalt dem Boden oder der Decke der Meßkammer zugeordnet werden müssen. Glocke und Ringspalt verändern jedoch die hydraulischen Verhältnisse in der Meßkammer wieder, so daß die endgültige Konstruktion erst nach einer langen Iteration feststeht.

Schließlich wäre als letzter Nachteil anzuführen, daß die vorbekannte Lösung grundsätzlich keine Möglichkeit bietet, das stärker belastete Lager auch bei kleinen Durchflüssen zu entlasten, da ausreichende hydrodynamische Kräfte erst entstehen, wenn der Durchfluß der Meßflüssigkeit eine bestimmte Schwelle überschreitet. Dieser Zähler ist daher bei vertikalem Einbau und kleinen Durchflüssen wenig genau.

Einen anderen Lösungsansatz zur Reduzierung der hydrodynamischen Kräfte offenbaren die GB 816 064, die US 2 845 798 und die DE-U 81 03 132 (DE-A-3 104 134). Bei diesen wird durch eine drastische Reduzierung der Spalte zwischen Flügelrad und Boden und Decke der Meßkammer die Flüssigkeitsströmung aus diesen Bereichen verdrängt. Durch die teilweise Immobilisierung der Meßflüssigkeit werden die hydrodynamischen Kräfte zwar reduziert, aber nicht beseitigt; gleichzeitig entstehen jedoch aufgrund der Adhäsionswirkung der Meßflüssigkeit starke Grenzschichtkräfte, die die Rotation des Flügelrades stark bremsen. Diese Zähler sind bei kleinen Durchflüssen sehr ungenau, auch bei horizontalem Einbau.

Der vorliegenden Erfindung liegt die Aufgabe zugrunde, die Flüssigkeitszähler der eingangs genannten Art dahingehend weiterzubilden, daß beide Lager des Flügelrades gleichmäßig belastet werden, und zwar bei beliebigem Einbau des Flüssigkeitszählers, und der bei großen und kleinen Durchflüssen exakt anzeigt.

Diese Aufgabe wird gelöst durch einen gattungsgemäßen Flüssigkeitszähler mit den Merkmalen gemäß Kennzeichen des Anspruchs 1.

Wie der eingangs genannte Stand der Technik belegt, entwickelt die die Meßkammer durchströmende Flüssigkeit Staukräfte und hydrodynamische Kräfte. Die Staukräfte werden bei allen Flüssigkeitszählern durch den Einbau von speziellen Staurippen in Boden und Decke der Meßkammer bewußt verstärkt, um die Meßkennlinie zu linearisieren. Die Staukräfte und die hydrodynamischen Kräfte wirken axial auf das Flügelrad bzw. auf die Axiallager des Flügelrades. Durch die erfindungsgemäße Symmetrie der Meßkammer zu der (gedachten) Mittelebene, in die auch die Ein- und Ausströmöffnungen und das Flügelrad selbst einbezogen sind, werden die Kräfte nicht reduziert oder beseitigt sondern symmetriert. Sie heben sich somit gegenseitig auf, ohne daß irgendwelche Kompromisse eingegangen werden müssen.

Eine dritte Kraft, die bei horizontalem Einbau des Zählers axial, bei vertikalem Einbau radial wirkt, ist das positive oder negative Gewicht des Flügelrades. In einer Weiterentwicklung wird daher diese Gewichtskraft gegen Null reduziert. Dies wird erfindungsgemäß dadurch gelöst, indem die Gesamtdichte des Flügelrades der Dichte der Meßflüssigkeit angepaßt wird. Das Flügelrad zentriert sich nun schon bei kleinsten Durchflüssen selbsttätig in der Mitte der Meßkammer bzw. zwischen seinen Axiallagern. Irgendwelche Einbauten, Justagen und dergleichen entfallen.

Diese dritte Kraft wirkt verständlicherweise auch auf die Räder des Reduziergetriebes und das Zählwerk. Deshalb wird auch deren Dichte an die Dichte der Meßflüssigkeit angepaßt. Dadurch werden jetzt auch deren Lager entlastet, d. h. Reibung und Abnützung reduziert.

Die Anpassung der Dichte des Flügelrades, der Räder des Reduziergetriebes und/oder des Zählwerks an die Dichte der Meßflüssigkeit erfolgt mittels eines Materials mit geeigneter Dichte, mittels Hohlräumen oder Auftriebskörpern, mittels Zusatzgewichten oder durch eine Kombination dieser Maßnahmen.

Auch bei Gewicht = Null können in vertikaler Einbaulage noch radiale bzw. axiale Lagerkräfte auftreten, wenn die Zentren von Auftrieb und Abtrieb des Flügelrades, der Räder des Reduziergetriebes und/oder des Zählwerks nicht zusammenfallen. Um auch hier Abhilfe zu schaffen, wird der Schwerpunkt genau in die Mitte zwischen die beiden Lager verlegt. Auch dies erfolgt mit Hilfe der schon beschriebenen Maßnahmen Materialauswahl, Auftriebskörper bzw. Hohlräume und/oder Zusatzgewichte, wobei letztere vorzugsweise längs der Wellenachsen verschiebbar sind.

In der Meßkammer vorgesehene hydraulische Einbauten sind ebenfalls spiegelsymmetrisch zu der Mittelebene gestaltet und positioniert.

Da jeder Flüssigkeitszähler werksseitig justiert werden muß, ist vorliegend eine Justierung anzuwenden, die die Symmetrie zur Mittelebene nicht stört. Aus diesem Grund ist vorzugsweise ein Bypaß mit veränderbarem Querschnitt vorgesehen, der an der Meßkammer vorbeigeführt ist.

Anhand der Zeichnung soll die Erfindung in Form zweier Ausführungsbeispiele näher erläutert werden. Es zeigen
- Fig. 1: einen Blick auf das Oberteil einer Meßkammer eines Einstrahl-Flüssigkeitszählers mit Flügelrad,
- Fig. 2: einen Längsschnitt durch einen Einstrahl-Flüssigkeitszähler gemäß Fig. 1,
- Fig. 3: einen Blick auf das Unterteil der Meßkammer des Einstrahl-Flüssigkeitszählers der Fig. 1,
- Fig. 4: einen Blick auf das Oberteil einer Meßkammer eines Mehrstrahl-Flüssigkeitszählers mit Flügelrad,
- Fig. 5: einen Längsschnitt durch die Meßkammer des Mehrstrahl-Flüssigkeitszählers der Fig. 4 und
- Fig. 6: einen Blick auf das Unterteil der Meßkammer des Mehrstrahl-Flüssigkeitszählers der Fig. 4.

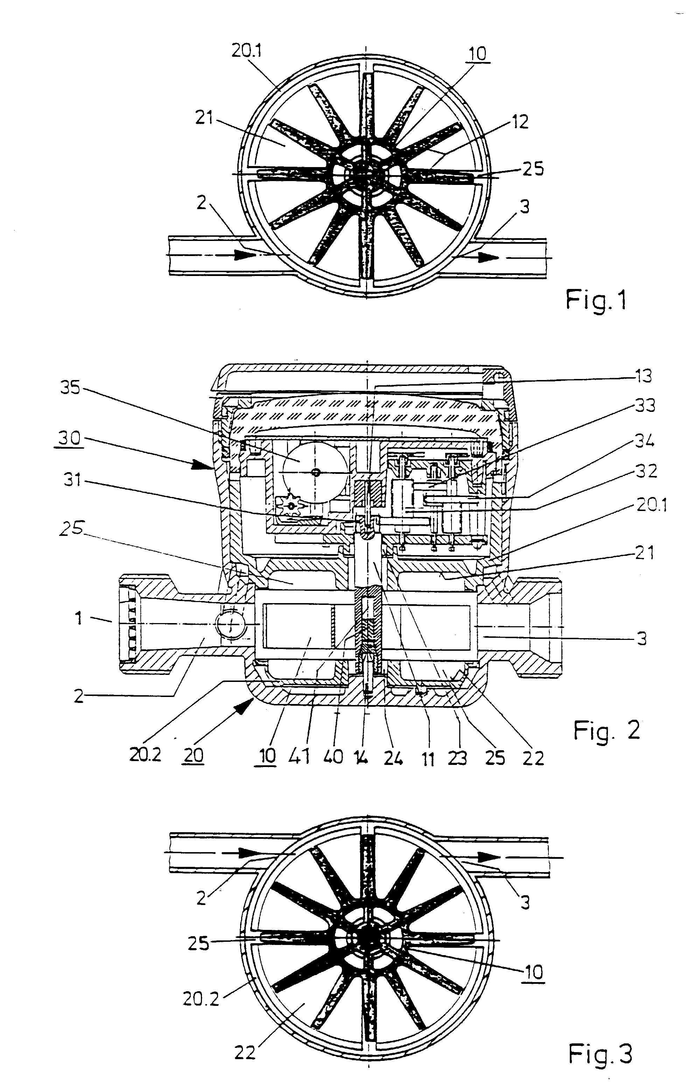

Die Fig. 1, 2 und 3 zeigen verschiedene Schnitte durch einen Einstrahl-Flüssigkeitszähler mit Zählwerkskammer 30, Meßkammer 20 und Flügelrad 10. Das Flügelrad 10 ist herkömmlich aufgebaut und besteht aus einer Welle 11 mit Lagerstellen 13, 14 an jedem Ende und einer Reihe von Flügelpaletten 12, die am Umfang der Welle 11 gleichmäßig verteilt sind. Die Meßkammer 20 besteht aus einem Oberteil 20.1 mit Meßkammerdecke 21 und einem Unterteil 20.2 mit Meßkammerboden 22. Ferner ist eine Einströmöffnung 2 und eine Ausströmöffnung 3 für die Meßflüssigkeit vorgesehen.

Von besonderer Bedeutung ist die gegebenenfalls nur gedachte Mittelebene 1 durch die Meßkammer 20. Das Flügelrad 10 und das Innere der Meßkammer 20 sind möglichst ideal spiegelsymmetrisch zu dieser Mittelebene 1 geformt bzw. positioniert. Diese Spiegelsymmetrie gilt auch für die Einström- und Ausströmöffnungen 2, 3, für Boden 22 und Decke 21 der Meßkammer 20, für alle hydraulische Einbauten 25 in der Meßkammer 20, für die Flügelradwelle 11 und insbesondere auch für die öffnungen 23, 24 für die Flügelradwelle 11 in Decke 21 und Boden 22 der Meßkammer 20. Dadurch wird erreicht, daß die von oben und von unten auf das Flügelrad 10 wirkenden Staukräfte und hydrodynamischen Kräfte identisch sind. Dadurch positionieren sie das Flügelrad 10 exakt in der Mitte der Meßkammer 20, ohne daß es irgendwelcher Zusatzeinrichtungen bedarf.

Fig. 2 zeigt, daß die Flügelradwelle 11 in die Zählwerkskammer 30 hinein verlängert ist und dort ein Ritzel 31 trägt. Zur Anpassung des spezifischen Gewichts des Flügelrades 10 an das spezifische Gewicht der Meßflüssigkeit ist die Flügelradwelle 11 hohl, so daß ein den Auftrieb fördernder Luftraum 41 entsteht. Gleichzeitig ist ein den Abtrieb förderndes Zusatzgewicht 40 vorgesehen. Dieses ist in der Längsachse der Flügelradwelle 11 verschieblich, so daß der Schwerpunkt des gesamten Flügelrads 10 genau in die Mitte zwischen die beiden Lager 13, 14 justiert werden kann. Dadurch schwebt das Flügelrad 10 frei von Gewichts- und sonstigen Kräften zwischen den beiden Lagern 13, 14, wodurch diese nur minimal und vor allem gleichmäßig beansprucht werden.

Dieselben Konstruktionsprinzipien sind auch auf die Räder 32, 33, 34 des Reduziergetriebes und das Zählwerk 35, die sich in der Zählwerkskammer 30 befinden und vom Flügelrad 10 über dessen Ritzel 31 angetrieben werden, angewendet. Reibung und Abnützung der Lager sind minimiert, der Zähler ist maximal empfindlich und genau.

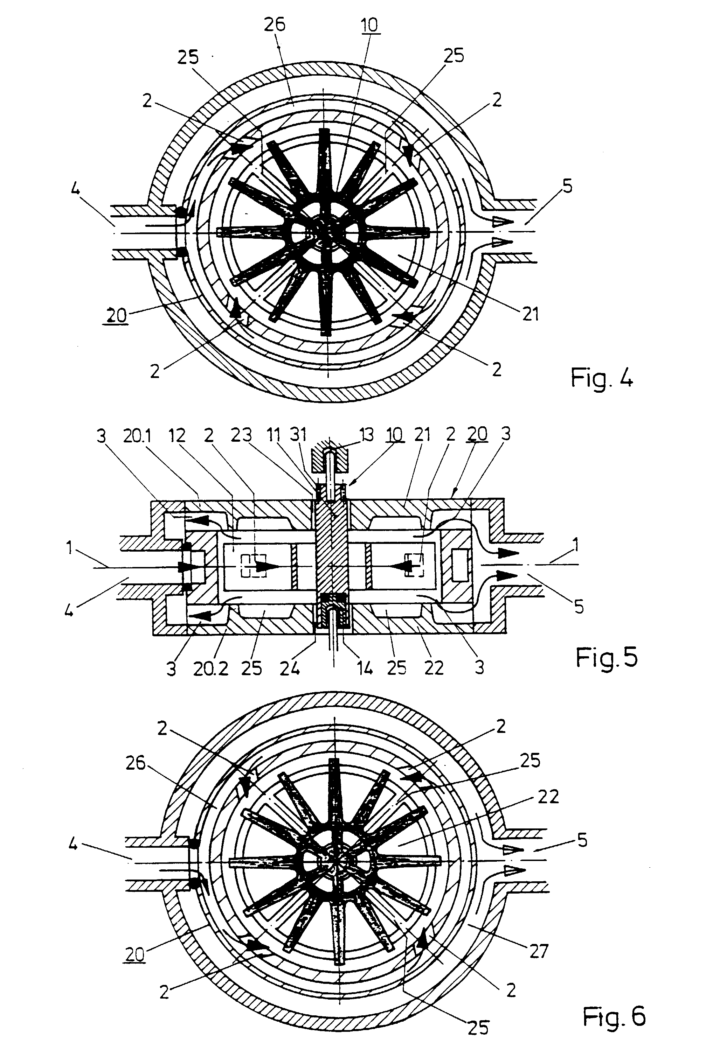

Die Fig. 4, 5 und 6 zeigen die Anwendung des erfindungsgemäßen Prinzips der Spiegelsymmetrie bei einem Mehrstrahl-Flüssigkeitszähler. Die Meßkammer 20 ist hier doppelwandig ausgeführt. Eine Meßflüssigkeits-Zuleitung 4 mündet in den Ringraum 26 der Doppelwand und von dort durch eine beliebige Anzahl gleichmäßig am Umfang verteilter tangentialer Einströmöffnungen 2 in das Innere der Meßkammer 20. Die Einströmöffnungen 2, das Innere der Meßkammer 20 sowie alle Teile 11, 12 des Flügelrads 10 sind wiederum möglichst ideal spiegelsymmetrisch zur gegebenenfalls gedachten Mittelebene 1 positioniert und gestaltet. Dies gilt auch für die Ausströmöffnungen 3, die im vorliegenden Beispiel im Bereich von Decke 21 und Boden 22 der Meßkammer 20 angeordnet sind.

Die aus den verschiedenen Ausströmöffnungen 3 ausströmende Meßflüssigkeit wird in einem Ringraum 27 gesammelt und verläßt den Zähler durch eine Ableitung 5.

Dank der Symmetrie zur Mittelebene 1 wird erreicht, daß die durch die Strömung der Meßflüssigkeit auf das Flügelrad 10 ausgeübten Kräfte in Richtung der Flügelradwelle 11 sich gegenseitig kompensieren, so daß sich das Flügelrad 10 selbsttätig in der Mitte der Meßkammer 20 positioniert. Dank dieser automatischen Selbstpositionierung werden die beiden Lager 13, 14 an den Enden der Flügelradwelle 11 auch gleichmäßig entlastet. Zusätzlich können Auftriebs- oder Abtriebskräfte auf die Lager des Flügelrades 10, der Räder 32, 33, 34 des Reduziergetriebes und das Zählwerk 35 durch einen Abgleich der spezifischen Gewichte verhindern. Eine Schrägstellung der Flügelradwelle 11 durch ungleichmäßige Verteilung der Zentren von Auftrieb und Abtrieb läßt sich verhindern, indem der Schwerpunkt des Flügelrades 10 genau in die Mitte zwischen die beiden Lager 13, 14 gelegt wird. Es versteht sich von selbst, daß solche Zähler einen geringeren Lagerverschleiß und eine längere Lebensdauer haben und durch das reduzierte Reibmoment bei noch kleineren Durchflüssen akzeptable Meßzahlen einhalten.

## Patentansprüche

1. Flüssigkeitszähler, umfassend
- ein Flügelrad (10)
-- mit einer Welle (11),
-- mit einer Anzahl von am Umfang der Welle (11) gleichmäßig verteilten Flügelpaletten (12)
-- und mit je einem Lager (13, 14) an den Enden der Welle (11);
- eine Meßkammer (20),
-- in Form eines Zylinders mit Boden (22) und Decke (21),
--- aufgeteilt in ein Oberteil (20.1) und ein Unterteil (20.2),
-- mit wenigstens einer Einströmöffnung (2)
-- und wenigstens einer Ausströmöffnung (3) für die Meßflüssigkeit;
-- einer gleichen Anzahl von Staurippen (25) in der Meßkammerdecke (21) und dem Meßkammerboden (22),
- eine Zählwerkskammer (30)
-- darin ein Zählwerk (35), über ein Reduziergetriebe (31, 32, 33, 34) angetrieben von der Welle (11) des Flügelrades (10);
- die Welle (11) des Flügelrades (10) steht im wesentlichen senkrecht zur einströmenden Meßflüssigkeit und durchdringt die Decke;
gekennzeichnet durch die Merkmale:
- das Innere der Meßkammer (20) mit ihren hydraulischen Einbauten ist spiegelsymmetrisch zu einer gedachten Mittelebene (1) zwischen Boden (22) und Decke (21) gestaltet,
- das Flügelrad (10) ist mit seiner Welle ist im Inneren der Meßkammer spiegelsymmetrisch zur Mittelebene (1) gestaltet und positioniert,
- die Welle (11) dringt in den Boden (22) der Meßkammer (20) ein,
-- die Ein- und Ausströmöffnungen (2, 3) sind in der Mittelebene (1) und/oder spiegelsymmetrisch zu derselben positioniert.

2. Flüssigkeitszähler nach Anspruch 1, gekennzeichnet durch folgendes Merkmal:
- das spezifische Gewicht des Flügelrades (10) ist gleich dem spezifischen Gewicht der Meßflüssigkeit.

3. Flüssigkeitszähler nach Anspruch 1 oder 2 als Naß- oder Teiltrockenläufer, gekennzeichnet durch folgendes Merkmal:
- das spezifische Gewicht der Räder (32, 33, 34) des Reduziergetriebes und/oder des Zählwerks (35) ist gleich dem spezifischen Gewicht der Meßflüssigkeit.

4. Flüssigkeitszähler nach Anspruch 2 oder 3, gekennzeichnet durch folgendes Merkmal:
- das spezifische Gewicht der Materialien, aus denen das Flügelrad (10), die Räder des Reduziergetriebes (32, 33, 34) und/oder das Zählwerk (35) bestehen, entspricht dem der Meßflüssigkeit.

5. Flüssigkeitszähler nach Anspruch 3 oder 4, gekennzeichnet durch folgendes Merkmal:
- das Flügelrad (10), die Räder des Reduziergetriebes (32, 33, 34) und/oder das Zählwerk (35) enthalten auftriebsfördernde Hohlräume (41).

6. Flüssigkeitszähler nach Anspruch 3, 4 oder 5,
gekennzeichnet durch folgendes Merkmal:
- das Flügelrad (11), die Räder des Reduziergetriebes (32, 33, 34) und/oder das Zählwerk (35) enthalten abtriebsfördernde Zusatzgewichte (40).

7. Flüssigkeitszähler nach Anspruch 6, gekennzeichnet durch folgendes Merkmal:
- das Zusatzgewicht (40) ist in der Längsachse der Wellen verschieblich.

8. Flüssigkeitszähler nach einem der Ansprüche 1 bis 7, gekennzeichnet durch folgendes Merkmal:
- bei vertikalem Einbau liegen die Schwerpunkte von Flügelrad (10), Reduziergetrieberädern (32, 33, 34) und/oder Zählwerk (35) genau zwischen den Lagern.

9. Flüssigkeitszähler nach wenigstens einem der Ansprüche 1 bis 8, gekennzeichnet durch folgendes Merkmal:
- ein Bypaß, dessen Querschnitt veränderbar ist, ist an der Meßkammer (20) vorbeigeführt.

10. Flüssigkeitszähler nach wenigstens einem der Ansprüche 1 bis 9, gekennzeichnet durch folgende Merkmale:
- die Lager (13, 14) sind Spitzenlager,
- die Durchmesser der Lagerzapfen sind minimiert.

## Claims

1. Liquid meter, comprising
- an impeller (10)
-- with a shaft (11),
-- with a number of vanes (12) evenly distributed at the circumference of the shaft (11)
-- and with a respective bearing (13, 14) at the ends of the shaft (11);
- a measuring compartment (20),
-- in the form of a cylinder with a bottom (22) and a cover (21),
--- divided into an upper part (20.1) and a lower part (20.2),
-- with at least one inflow opening (2)
-- and at least one outflow opening (3) for the liquid being measured;
-- an equal number of baffle ribs (25) in the measuring compartment cover (21) and the measuring compartment bottom (22),
- a counter mechanism compartment (30)
-- containing a counter mechanism (35) driven by the shaft (11) of the impeller (10) via a reduction gear (31, 32, 33, 34);
- the shaft (11) of the impeller (10) extends essentially perpendicularly to the inflowing liquid being measured and passes through the cover;
characterised by the features:
- the interior of the measuring compartment (20) with its hydraulic fittings is formed with mirror symmetry in relation to an imaginary centre plane (1) between the bottom (22) and the cover (21),
- the impeller (10) with its shaft is formed and positioned with mirror symmetry in relation to the centre plane (1) in the interior of the measuring compartment,
- the shaft (11) penetrates into the bottom (22) of the measuring compartment (20),
-- the inflow and outflow openings (2, 3) are positioned in the centre plane and/or with mirror symmetry in relation to the latter.

2. Liquid meter according to claim 1, characterised by the following feature:
- the relative density of the impeller (10) is equal to the relative density of the liquid being measured.

3. Liquid meter according to claim 1 or 2 as a wet-dial or dry-dial meter, characterised by the following feature:
- the relative density of the wheels (32, 33, 34) of the reduction gear and/or of the counter mechanism (35) is equal to the relative density of the liquid being measured.

4. Liquid meter according to claim 2 or 3, characterised by the following feature:
- the relative density of the materials of which the impeller (10), the wheels of the reduction gear (32, 33, (34) and/or the counter mechanism (35) consist corresponds to that of the liquid being measured.

5. Liquid meter according to claim 3 or 4, characterised by the following feature:
- the impeller (10), the wheels of the reduction gear (32, 33, 34) and or the counter mechanism (35) comprise lift-promoting cavities (41).

6. Liquid meter according to claim 3, 4 or 5, characterised by the following feature:
- the impeller (11), the wheels of the reduction gear (32, 33, 34) and/or the counter mechanism (35) comprise negative lift-promoting additional weights (40).

7. Liquid meter according to claim 6, characterised by the following feature:
- the additional weight (40) can be displaced along the longitudinal axis of the shafts.

8. Liquid meter according to one of claims 1 to 7, characterised by the following feature:
- the centres of gravity of the impeller (10), reduction gear wheels (32, 33, 34) and/or counter mechanism (35) lie exactly between the bearings in a vertical installation.

9. Liquid meter according to at least one of claims 1 to 8, characterised by the following feature:
- a bypass of a variable cross section leads past the measuring compartment (20).

10. Liquid meter according to at least one of claims 1 to 9, characterised by the following features:
- the bearings (13, 14) are taper bearings,
- the diameters of the journals are minimised.

## Revendications

1. Compteur de fluide comprenant une roue à ailettes (10), avec un arbre (11), un certain nombre de palettes d'ailettes (12), uniformément réparties à la périphérie de l'arbre (11), et un palier (13,14) sur chaque extrémité de l'arbre (11) ; une chambre de mesure (20), sous la forme d'un cylindre avec fond (22) et couvercle (21), subdivisée en une partie supérieure (20.1) et une partie inférieure (20.2), avec au moins une ouverture d'entrée (2) et au moins une ouverture de sortie (3) pour le liquide à mesurer ; un nombre identique de nervures de retenue (25) dans le couvercle de la chambre de mesure (21) et le fond de la chambre de mesure (22); une chambre de compteur (30) à l'intérieur de laquelle un compteur (35) est entraîné par l'intermédiaire d'un engrenage démultiplicateur (31, 32, 33, 34) par l'arbre (11) de la roue à ailettes (10), l'arbre (11) de la roue à ailettes (10) étant à peu près perpendiculaire à l'arrivée de liquide à mesurer et traversant le couvercle ;
caractérisé en ce que l'intérieur de la chambre de mesure (20) avec ses inserts hydrauliques est conçu de façon symétrique par rapport à un plan central (1) imaginaire entre le fond (22) et le couvercle (21), la roue à ailettes (10) avec son arbre est conçue et positionnée à l'intérieur de la chambre de mesure de façon symétrique par rapport au plan central (1), l'arbre (11) pénètre dans le fond (22) de la chambre de mesure (20), et les orifices d'entrée et de sortie (2, 3) sont positionnés dans le plan central (1) et/ou de façon symétrique par rapport à celui-ci.

2. Compteur de fluide selon la revendication 1, caractérisé en ce que le poids spécifique de la roue à ailettes (10) est identique au poids spécifique du liquide à mesurer.

3. Compteur de fluide selon la revendication 1 ou 2, sous la forme d'un compteur d'eau de type humide ou d'un compteur d'eau de type partiellement sec, caractérisé en ce que le poids spécifique des roues (32, 33, 34) de l'engrenage démultiplicateur et/ou du compteur (35) est identique au poids spécifique du liquide à mesurer.

4. Compteur de fluide selon la revendication 2 ou 3, caractérisé en ce que le poids spécifique des matériaux constituant la roue à ailettes (10), les roues de l'engrenage démultiplicateur (32, 33, 34) et/ou le compteur (35) correspond à celui du liquide à mesurer.

5. Compteur de fluide selon la revendication 3 ou 4, caractérisé en ce que la roue à ailettes (10), les roues de l'engrenage démultiplicateur (32, 33, 34,) et /ou le compteur (35) contiennent des cavités (41) qui favorisent la force ascensionnelle.

6. Compteur de fluide selon la revendication 3, 4 ou 5, caractérisé en ce que la roue à ailettes (11), les roues de l'engrenage démultiplicateur (32, 33, 34) et/ou le compteur (35) contiennent des poids supplémentaires (45) qui favorisent la force descensionnelle.

7. Compteur de fluide selon la revendication 6, caractérisé en ce que le poids supplémentaire (40) peut être déplacé dans l'axe longitudinal des arbres.

8. Compteur de fluide selon l'une quelconque des revendications suivantes 1 à 7, caractérisé en ce que dans le cas d'un montage vertical, les centres de gravité de la roue à ailettes (10), des roues d'engrenage démultiplicateur (32, 33, 34), et/ou du compteur (35) se situent exactement entre les paliers.

9. Compteur de fluide selon au moins l'une quelconque des revendications 1 à 8, caractérisé en ce qu'un by-pass, dont la section est modifiable, est passé devant la chambre de mesure(20).

10. Compteur de fluide selon l'une quelconque des revendications 1 à 9, caractérisé en ce que les paliers (13, 14) sont des paliers à pivot, et les diamètres des tourillons sont réduits au minimum.
